# EUROPÄISCHE PATENTSCHRIFT

(11) **EP 0 614 787 B1**
(45) Veröffentlichungstag und Bekanntmachung des Hinweises auf die Patenterteilung: **15.12.1999**
(21) Anmeldenummer: 94102975.3
(22) Anmeldetag: 28.02.1994
(51) Int. Cl.: B60R 21/30, B60R 21/20, B60R 21/28

(54) **Fahrerseitiges Gassack-Rückhaltesystem für Fahrzeuge**
Driver side air bag restraint system for vehicles
Sac gonflable de retenue côté conducteur pour véhicules

(30) Priorität: 12.03.1993 DE 4307969
(43) Veröffentlichungstag der Anmeldung: 14.09.1994
(60) Teilanmeldung: 98118638.0
(73) Patentinhaber: TRW Occupant Restraint Systems GmbH & Co. KG, 73551 Alfdorf (DE)
(72) Erfinder: Föhl, Artur, D-73614 Schorndorf (DE)
(74) Vertreter: Degwert, Hartmut, Dipl.-Phys.

(56) Entgegenhaltungen:
- EP-A- 0 582 335
- DE-A- 1 935 426
- DE-A- 2 151 710
- FR-A- 2 238 614
- GB-A- 2 192 841
- US-A- 3 787 075
- US-A- 3 843 152

## Beschreibung

Die Erfindung betrifft ein fahrerseitiges Gassack-Rückhaltesystem für Fahrzeuge, mit einer außerhalb des Lenkrades angeordneten Gasquelle zum Befüllen des an der Lenkradnabe angeordneten Gassacks und einer zwischen der Gasquelle und der Einströmöffnung des Gassacks angeordneten Gasführung, bei welchem die Gasführung an ihrem Übergang zu dem Lenkrad durch einen ringförmigen Dichtspalt zwischen einer an der Lenkradnabe gebildeten ersten Spaltbegrenzungsfläche und einer gegenüberliegenden zweiten Spaltbegrenzungsfläche an einer bezüglich des Fahrzeugaufbaus feststehenden Wandung der Gasführung ohne Berührung zwischen diesen Spaltbegrenzungsflächen abgedichtet ist, der Dichtspalt durch seine Dimensionierung und Anordnung relativ zur Strömungsrichtung der Gase das Einsaugen von Außenluft durch den Dichtspalt unter der Wirkung der Gasströmung im Inneren der Gasführung aufgrund des Strahlpumpen-Effektes ermöglicht und die Gasführung eine die Lenkwelle ringförmig umgebende, topfförmige Verteilerkammer aufweist, an der die zweite Spaltbegrenzungsfläche gebildet ist.

Üblicherweise ist bei fahrerseitigen Gassack-Rückhaltesystemen ein pyrotechnischer Gasgenerator in die Lenkradnabe integriert. Der Gasgenerator wird durch einen elektrischen Impuls gezündet, den ein Verzögerungssensor abgibt.

Zur Einsparung des Raumbedarfs für die Unterbringung des Gasgenerators in der Lenkradnabe und zur Vermeidung von Drehkupplungen für die Zuführung des elektrischen Auslöseimpulses zu dem drehfest in die Lenkradnabe eingebauten Gasgenerator ist bereits in der DE 40 11 492 A1 vorgeschlagen worden, die Gasquelle außerhalb des Lenkrades anzuordnen. Die Gasquelle umfaßt mehrere Druckgasbehälter, die fest im Fahrzeug eingebaut sind. Von jedem Druckgasbehälter führt eine Leitung zu einer Drehkupplung, die aus einer ortsfesten Verteilerscheibe und einer mit dieser in Gleitkontakt stehenden mit der Lenkradnabe drehbaren Verteilerscheibe gebildet ist. Ein solche Drehkupplung ist aufwendig in der Herstellung und beeinträchtigt durch den Reibungswiderstand zwischen den Verteilerscheiben die Leichtgängigkeit des Lenkrades.

Ein gattungsgemäßes fahrerseitiges Gassack-Rückhaltesystem ist aus der US-A-3,843,152 bekannt. Die Abmessungen des dort gezeigten Dichtspaltes sind unabhängig von der Gasströmung zum Befüllen des Gassacks.

Die FR-A-2 238 614 und die DE-A-2 151 710 beschreiben ein Gassack-Rückhaltesystem, bei dem die Nabe eines Lenkrads gegen ein, eine Verteilerkammer umgebendes becherförmiges Element durch eine im wesentlichen zylindrische Dichtlippe abgedichtet ist. Die Dichtlippe ist an dem becherförmigen Element angebracht, liegt lose an der Lenkradnabe an und ermöglicht eine Drehung des Lenkrads gegen das becherförmige Element. Die Dichtlippe wird bei in der Verteilerkammer vorhandenem Überdruck nach außen gegen die Lenkradnabe gedrückt, dichtet die Gasführung ab und verhindert dadurch das Entweichen von unter Druck stehendem Gas.

Durch die Erfindung gemäß Anspruch 1 wird ein fahrerseitiges Gassack-Rückhaltesystem für Fahrzeuge geschaffen, bei dem sich der Dichtspalt in Abhängigkeit von der Gasströmung zum Befüllen des Gassacks verändern kann. Erfindungsgemäß ist die Gasführung an ihrem Übergang zu dem Lenkrad durch einen ringförmigen Dichtspalt zwischen einer an der Lenkradnabe gebildeten ersten Spaltbegrenzungsfläche und einer gegenüberliegenden zweiten Spaltbegrenzungsfläche an einer bezüglich des Fahrzeugaufbaus feststehenden Wandung der Gasführung ohne Berührung zwischen diesen Spaltbegrenzungsflächen abgedichtet. Durch den Wegfall von miteinander in Berührung stehenden Drehkupplungsteilen wird die Leichtgängigkeit gegenüber einem Lenkrad ohne Gassack-Rückhaltesystem nicht verschlechtert, da durch die Gasführung zwischen der Lenkradnabe und der außerhalb des Lenkrades angeordneten Gasquelle keine die Leichtgängigkeit des Lenkrades beeinträchtigende Reibungseinflüsse auftreten. Die Gasführung ist mit geringem Aufwand in Serie herstellbar. Der Dichtspalt wird lediglich durch die Formgebung und Anordnung bestimmter Bereiche an der Lenkradnabe und an der Lenksäule gebildet, wozu es nur eines geringen Aufwandes an Material und Konstruktion bedarf. Die Erfindung beruht auf der Erkenntnis, daß die Gasströmung von der Gasquelle bis hinein in den Gassack an einem auf dem Weg der Gasführung vorhandenen Dichtspalt nicht entweichen kann, sondern an dem Dichtspalt sogar ein die Füllung des Gassacks unterstützender Strahlpumpen-Effekt auftritt, durch den Umgebungsluft in die Gasströmung eingesaugt wird. Weiterhin beruht die Erfindung auf der Erkenntnis, daß der Dichtspalt beim Eintauchen des Fahrzeuginsassen in den aufgeblasenen Gassack in vorteilhafter Weise ein kontrolliertes Abströmen des Füllgases zumindest unterstützt. Die bei herkömmlichen Konstruktionen erforderlichen Entlastungsöffnungen in der Wandung des Gassacks können zumindest teilweise entfallen. Dies ist auch insofern von Vorteil, als Verletzungen des Insassen durch etwaige aus dem Gassack austretende Partikel oder heiße Gase vermieden werden. Der Dichtspalt ist durch eine Dichtlippe verschließbar, die an der Spaltbegrenzungsfläche angeordnet ist, und die aufgrund des Strömungsdrucks in der Gasführung beim Befüllen des Gassacks auslenkbar ist und die bei nachlassendem Gasdruck und/oder entgegengesetzter Strömungsrichtung in der Gasführung den Dichtspalt wieder freigibt und das Ausströmen der Gase aus dem Gassack ermöglicht. Durch diese Maßnahmen kann der Dichtspalt in Abhängigkeit von der Gasströmung zum Befüllen des Gassacks verändert werden. Eine besonders raumsparende und leicht in ein Fahrzeug integrierbare Ausführungsform ist in den Patentansprüchen 4 und 5 angegeben.

Weitere Merkmale und Vorteile der Erfindung ergeben sich aus den Unteransprüchen sowie aus der Beschreibung und der beigefügten Zeichnung, auf die Bezug genommen wird. In der Zeichnung zeigen:
Fig. 1 eine schematische Seitenansicht eines fahrerseitigen Gassack-Rückhaltesystems vor seiner Aktivierung;
Fig. 2 das Gassack-Rückhaltesystem im aktivierten Zustand unmittelbar vor Beginn der Vorverlagerung des Fahrzeuginsassen;
Fig. 3 das Gassack-Rückhaltesystem im Moment des Eintauchens des Fahrzeuginsassen in den aufgeblasenen Gassack;
Fig. 4 eine Schnittansicht durch ein Lenkrad entlang Linie IV-IV in Fig. 5;
Fig. 5 eine Draufsicht auf ein Lenkrad bei abgenommenem Gassack;
Fig. 6 einen Schnitt entlang Linie VI-VI in Fig. 5;
Fig. 7 einen Teilschnitt bei einer Ausführungsform mit an den Dichtspalt angrenzender Dichtlippe im Ruhezustand;
Fig. 8 die in Fig. 7 gezeigte Ausführungsform bei ausgelenkter Dichtlippe und verschlossenem Dichtspalt;
Fig. 9 einen schematischen Längsschnitt zweier teleskopartig ineinander verschiebbarer Rohrabschnitte vor einer Verteilerkammer;
Fig. 10 einen diametralen Teilschnitt einer Ausführungsform eines Lenkrades, welches als vorgefertigtes Gassack-Rückhaltesystem zur Montage am Ende der Lenkwelle bereit ist;
Fig. 11 einen Teilschnitt einer Ausführungsform des Dichtspaltes zwischen Lenkradnabe und Verteilerkammer.

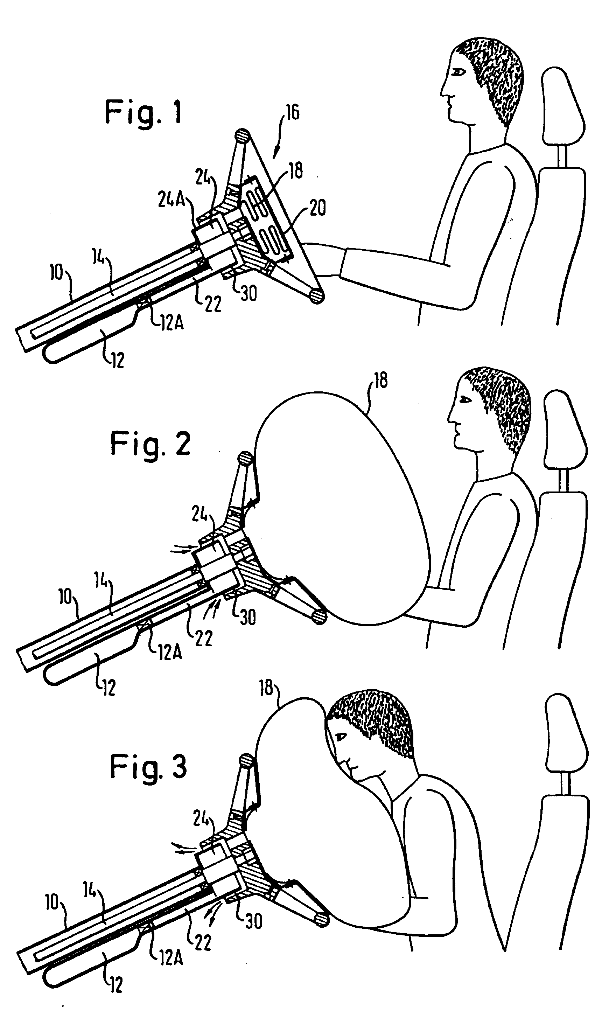

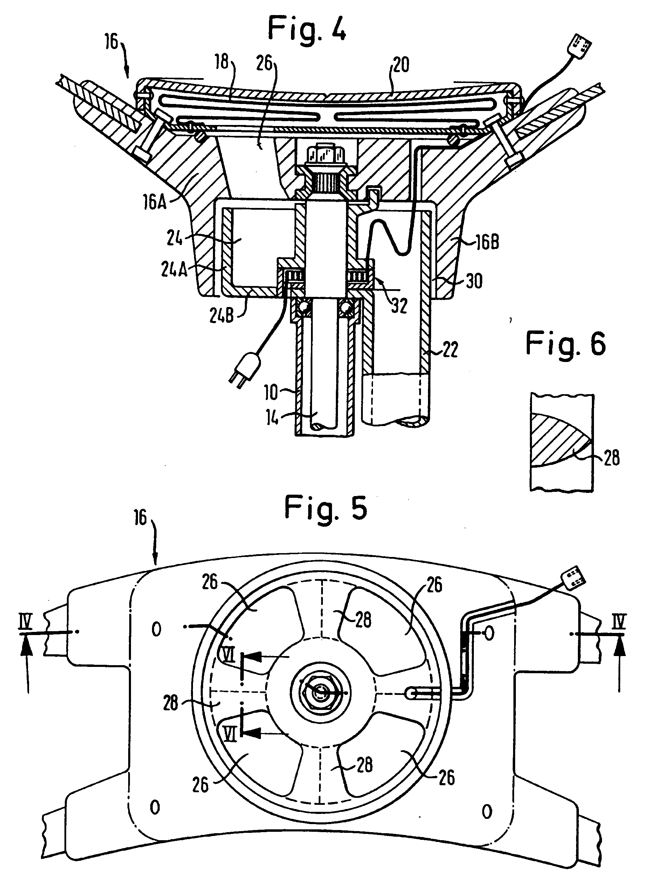

An der Lenksäule 10 eines Fahrzeugs ist ein gestreckter Druckgasbehälter 12 von allgemein zylindrischer Form außenseitig und parallel zur Achse der Lenksäule angeordnet. Die von der rohrförmigen Lenksäule 10 umgebene Lenkwelle 14 trägt an ihrem dem Fahrer zugewandten Ende ein Lenkrad 16, dessen Nabe einen zentralen Durchgang für das mit Gewinde versehene Ende der Lenkwelle 14 aufweist und mittels einer Schraubmutter daran festgelegt ist (Fig. 4). Ein im Ruhezustand (Fig. 1) gefalteter Gassack 18 ist an der Nabe des Lenkrades 16 angeordnet und wird von einer aufreißbaren Abdeckung 20 auf der dem Fahrer zugewandten Seite abgedeckt. Zwischen dem Druckgasbehälter 12 und dem Innenraum des Gassacks 18 besteht eine Gasführung, die weiter unten näher beschrieben wird.

Der Druckgasbehälter 12 ist mit einem Verschluß 12A versehen, der zur Aktivierung des Rückhaltesystems beispielsweise mittels einer kleinen pyrotechnischen Ladung zerstört werden kann.

Bei aktiviertem Rückhaltesystem (Fig. 2) sind die in dem Druckgasbehälter 12 unter einem hohen Druck von beispielsweise 200 bar gespeicherten Gase in den Gassack 18 eingeströmt, der nun aufgeblasen ist. Anschließend tritt die Vorverlagerung des Fahrzeuginsassen ein, dessen Kopf und Oberkörper schließlich in den aufgeblasenen Gassack 18 eintauchen (Fig. 3).

An den Druckgasbehälter 12 ist eine Rohrleitung 22 angeschlossen, die sich parallel zur Lenksäule 10 entlang deren Mantelfläche erstreckt und in eine ringförmige, die Lenkwelle 14 umgebende Verteilerkammer 24 einmündet. Diese Verteilerkammer 24 wird von einer allgemein topfförmigen Wandung begrenzt, deren Umfangsteil 24A zylindrisch und deren Boden 24B eben ist; diese topfförmigen Wandung ist einteilig mit der Rohrleitung 22 verbunden und zur Seite des Lenkrades hin offen.

Die Nabe 16A des Lenkrades 16 weist gegenüber der Verteilerkammer 24 vier auf einem Kreis angeordnete Durchtrittsöffnungen 26 auf. Die Durchtrittsöffnungen 26 sind durch speichenartig angeordnete Stege 28 abgegrenzt, deren Querschnitt ein stromlinienförmiges Profil aufweist, wie in Fig. 6 gezeigt. Die Seitenflächen der Stege 28 konvergieren jeweils in Richtung zu der Verteilerkammer 24 und bilden eine gemeinsame Kante An die Lenkradnabe 16A ist eine den Umfangsteil 24A der Verteilerkammer 24 umgebende Schürze 16B angeformt. Zwischen der zylindrischen Innenfläche der Schürze 16B und der Außenfläche des Umfangsteils 24A ist ein ringförmiger Dichtspalt 30 gebildet. Die axiale Länge des Dichtspaltes 30 entspricht ungefähr der Höhe der Verteilerkammer 24. Wie aus Fig. 4 ersichtlich ist, liegen die Öffnungen 26 der Lenkradnabe 16A unmittelbar der offenen Seite der Verteilerkammer 24 gegenüber. Ferner liegen die Öffnungen 26 unmittelbar der Einblasöffnung des gefalteten Gassacks 18 gegenüber.

Wie aus Fig. 4 ferner ersichtlich ist, läßt sich im Inneren der Verteilerkammer 24 ohne Schwierigkeiten eine elektrische Drehkupplung 32 für den Betätigungskontakt des Signalhorns unterbringen. Diese Drehkupplung 32 besteht aus einer spiralförmigen "Uhrwerkfeder" in einem am Boden 24B befestigten zylindrischen Gehäuse und einem an die Lenkradnabe 16A drehfest angekoppelten, die Lenkwelle 14 hülsenförmig umgebenden Führungsteil, aus dem ein Anschluß der Drehkupplung herausgeführt ist.

Bei Aktivierung des Rückhaltesystems gelangen die aus dem Druckgasbehälter 12 ausströmenden Gase über die Rohrleitung 22 in die Verteilerkammer 24, treten durch die Öffnungen 26 und gelangen in den Innenraum des Gassacks 18, der sich nun ausdehnt und die Abdeckung 20 aufbricht. Durch den ringförmigen Dichtspalt 30 kann die Gasströmung nicht entweichen; vielmehr wird sogar aufgrund des durch die Gasströmung verursachten Strahlpumpen-Effektes Umgebungsluft durch den Dichtspalt 30 in die Gasströmung eingesaugt, wie in Fig. 2 durch Pfeile angedeutet ist. Bei dem weiteren Ablauf des Fahrzeugaufpralls taucht der Fahrzeuginsasse mit Kopf und Oberkörper in den aufgeblasenen Gassack 18 ein, wie in Fig. 3 gezeigt. Es tritt nun eine Umkehrung der Strömungsrichtung ein, da der Gasvorrat aus dem Druckgasbehälter 12 erschöpft ist und im Inneren des aufgeblasenen Gassacks 18 ein Überdruck herrscht, der durch das Eindringen des Fahrzeuginsassen noch vergrößert wird. Der Dichtspalt 30 wirkt nun als gedrosselte Entlastungsöffnung, die ein kontrolliertes Ausströmen der Gase aus dem Gassack 18 ermöglicht. Durch geeignete Dimensionierung des Dichtspalts 30 kann die Ausströmrate in einem weiten Bereich eingestellt werden. Entlastungsöffnungen in der Wandung des Gassacks 18 können teilweise oder auch ganz entfallen. Es kann somit verhindert werden, daß der Fahrzeuginsasse durch etwa in den austretenden Gasen mitgeführte Partikel verletzt wird oder, im Falle der Verwendung eines pyrotechnischen Gasgenerators anstelle des Druckgasbehälters als Gasquelle, mit heißen Gasen in Berührung kommt.

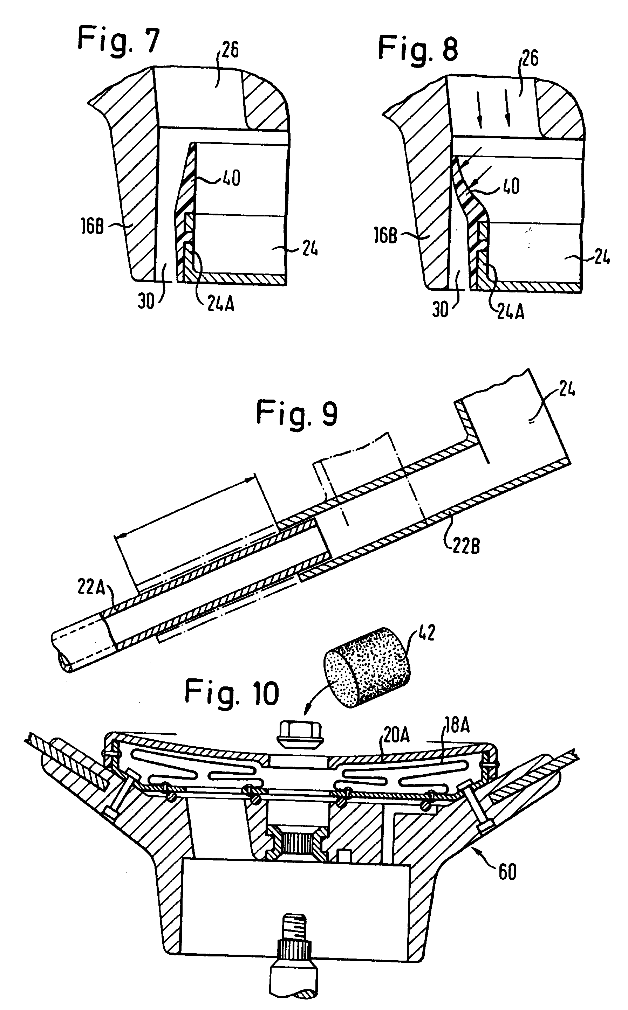

Bei der Ausführungsform nach den Figuren 7 und 8 ist das der Lenkradnabe 16A zugewandte Ende des Umfangsteils 24A der topfförmigen Wandung als flexible Dichtlippe 40 ausgebildet. Diese flexible Dichtlippe 40 nimmt im Ruhezustand die in Fig. 7 gezeigte Stellung ein, in welcher sie den Dichtspalt 30 freigibt. Beim Befüllen des Gassacks wird die Dichtlippe 40 durch den hohen Innendruck in die in Fig. 8 gezeigte Stellung ausgelenkt, in welcher sie den Dichtspalt 30 verschließt. In diesem Zustand wirkt die Dichtlippe 40 als Ventil, um ein Abströmen der Gasfüllung über den relativ breiten Dichtspalt 30 zu verhindern. Nachdem der Gassack vollständig aufgeblasen und der Druck in der Verteilerkammer 24 abgefallen ist, gibt die Dichtlippe 40 den Dichtspalt 30 wieder frei und öffnet somit innendruckabhängig einen Entlastungsweg.

Fig. 9 zeigt eine Ausführungsform der Rohrleitung zwischen der Verteilerkammer 24 und der (nicht gezeigten) Gasquelle für ein in der Tiefe verstellbares Lenkrad. Die Rohrleitung besteht aus zwei teleskopartig ineinander verschiebbaren Rohrabschnitten 22A und 22B. Durch diese Ausgestaltung wird die Länge des Dichtspaltes bei einer Verstellung des Lenkrades nicht verändert. Falls das Lenkrad auch in der Höhe verstellbar sein soll, ist gemäß einer Weiterbildung dieser Ausführungsform vorgesehen, den Abschnitt 22A der Rohrleitung wenigstens teilweise flexibel auszubilden.

In Fig. 10 ist eine fertig mit gefaltetem Gassack 18A und mit einer Abdeckung 20A bestückte Lenkrad-Baugruppe 60 gezeigt, die zur Montage am Ende einer Lenkwelle bereit ist. Abweichend von der bisher beschriebenen Ausführungsform ist der Gassack 18A schlauchringförmig ausgebildet, so daß er im gefalteten Zustand einen zentralen Freiraum für das Aufsetzen der Schraubmutter auf das Ende der Lenkwelle beläßt. Die Abdeckung 20A ist mit einer entsprechenden Ausnehmung versehen, in die nach der Montage der Lenkrad-Baugruppe ein Stopfen 42 eingesetzt werden kann.

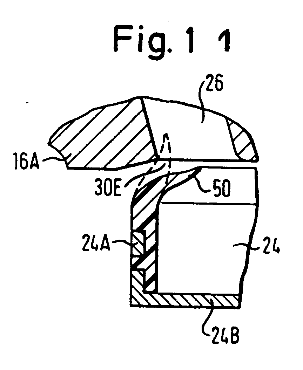

Die Figur 11 zeigt eine andere Ausführungsform des Dichtspaltes.

Bei der gezeigten Ausführungsform ist das der Lenkradnabe 16A zugewandte Ende des Umfangsteils 24A der die Verteilerkammer 24 begrenzenden Wandung durch eine flexible Dichtlippe 50 gebildet, die durch den Gasstrom beim Befüllen des Gassacks ausgelenkt wird und den Dichtspalt 30E verschließt (gestrichelte Stellung). Bei entgegengesetzter Strömungsrichtung bewegt sich die Dichtlippe 50 in die entgegengesetzte Richtung und gibt den Dichtspalt 30E frei.

## Patentansprüche

1. Fahrerseitiges Gassack-Rückhaltesystem für Fahrzeuge, mit einem außerhalb des Lenkrades (16) angeordneten Druckgasspeicher (12) zum Befüllen des an der Lenkradnabe (16A) angeordneten Gassacks (18) und einer zwischen dem Druckgasspeicher (12) und der Einströmöffnung des Gassacks (18) angeordneten Gasführung, bei welchem die Gasführung an ihrem Übergang zu dem Lenkrad (16) durch einen ringförmigen Dichtspalt (30) zwischen einer an der Lenkradnabe (16A) gebildeten ersten Spaltbegrenzungsfläche und einer gegenüberliegenden zweiten Spaltbegrenzungsfläche an einer bezüglich des Fahrzeugaufbaus feststehenden Wandung (24A) der Gasführung ohne Berührung zwischen diesen Spaltbegrenzungsflächen abgedichtet ist, der Dichtspalt (30) durch seine Dimensionierung und Anordnung relativ zur Strömungsrichtung der Gase das Einsaugen von Außenluft durch den Dichtspalt (30) unter der Wirkung der Gasströmung im Inneren der Gasführung aufgrund des Strahlpumpen-Effektes ermöglicht und die Gasführung eine die Lenkwelle (14) ringförmig umgebende, topfförmige Verteilerkammer (24) aufweist, an der die zweite Spaltbegrenzungsfläche gebildet ist, wobei der Dichtspalt zwischen Gasführung und Umgebung einen im wesentlichen geradlinigen Strömungspfad bildet dadurch gekennzeichnet, daß die zweite Spaltbegrenzungsfläche durch eine flexible Dichtlippe (40; 50) gebildet ist, die im Ruhezustand parallel zur ersten Spaltbegrenzungsfläche angeordnet ist.

2. Gassack-Rückhaltesystem nach Anspruch 1, dadurch gekennzeichnet, daß der Dichtspalt (30; 30E) durch die aufgrund des Strömungsdrucks in der Gasführung beim Befüllen des Gassacks (18) auslenkbare Dichtlippe (40; 50) verschließbar ist.

3. Gassack-Rückhaltesystem nach Anspruch 2, dadurch gekennzeichnet, daß die Dichtlippe (40; 50) bei nachlassendem Gasdruck und/oder entgegengesetzter Strömungsrichtung in der Gasführung den Dichtspalt (30; 30E) wieder freigibt und das Ausströmen der Gase aus dem Gassack (18) ermöglicht.

4. Gassack-Rückhaltesystem nach einem der vorstehenden Ansprüche, dadurch gekennzeichnet, daß der Druckgasspeicher (12) einen allgemein zylinderförmig gestreckten Druckbehälter aufweist, der parallel zur Lenksäule (10) angeordnet und durch eine parallel zur Lenksäule (10) und außerhalb von dieser angeordnete Rohrleitung (22) mit dem Innenraum der Verteilerkammer (24) verbunden ist.

5. Gassack-Rückhaltesystem nach einem der vorstehenden Ansprüche, für ein in der Tiefe verstellbares Lenkrad, dadurch gekennzeichnet, daß die Rohrleitung aus teleskopartig ineinander verschiebbaren Abschnitten (22A, 22B) zusammengesetzt ist.

6. Gassack-Rückhaltesystem nach einem der vorstehenden Ansprüche, dadurch gekennzeichnet, daß der Dichtspalt (30) zwischen dem zylindrischen Umfangsteil (24A) der die Verteilerkammer (24) begrenzenden Wandung und der Innenseite einer die Verteilerkammer (24) umgebenden, an die Lenkradnabe (16A) angeformten Schürze (16B) gebildet ist.

7. Gassack-Rückhaltesystem nach einem der vorstehenden Ansprüche, dadurch gekennzeichnet, daß mehrere Gasdurchtrittsöffnungen (26) in der Nabe (16A) des Lenkrades zwischen speichenförmig angeordneten Stegen (28) ausgebildet sind, die jeweils zur Verteilerkammer (24) hin konvergierende Seitenflächen aufweisen.

8. Lenkrad für ein Gassack-Rückhaltesystem nach einem der vorstehenden Ansprüche, dadurch gekennzeichnet, daß es mit dem schlauchringförmig ausgebildeten, zusammengefalteten und mit einer Abdeckung (20A) versehenen Gassack (18A) eine vormontierte Baugruppe (60) bildet.

## Claims

1. A driver-side gas bag restraining system for vehicles, comprising a compressed gas storage (12) arranged outside the steering wheel (16) for filling the gas bag (18) arranged on the steering wheel hub (16A) and a gas duct means arranged between the compressed gas storage (12) and the inlet port of the gas bag (18), in which at its transition to the steering wheel (16) the gas duct means is sealed off by an annular sealing gap (30) between a first gap defining surface formed on the steering wheel hub (16A) and an oppositely arranged second gap defining surface on a wall (24A), which is stationary in relation to the vehicle bodywork, of the gas duct means without contact between these gap defining surfaces, in which the sealing gap (30), owing to its dimensions and its arrangement in relation to the direction of the flow of the gases, renders possible the entrainment of air from the surroundings through the sealing gap (30) under the action of the gas flow inside the gas duct means as a result of a jet pump effect and in which the gas duct means comprises a pot-shaped distribution chamber (24) which annularly surrounds the steering shaft (14) and on which the second gap defining surface is formed, the sealing gap between the gas duct means and the surroundings constituting a substantially linear flow path, characterized in that the second gap defining surface is formed by a flexible sealing lip (40; 50) which in the rest condition is arranged parallel to the first gap defining surface.

2. The gas bag restraining system according to claim 1, characterized in that the sealing gap (30; 30E) is able to be closed by the sealing lip (40; 50) able to be deflected owing to the flow pressure in the gas duct means during filling of the gas bag (18).

3. The gas bag restraining system according to claim 2, characterized in that on decreasing gas pressure and/or opposite direction of flow in the gas duct means the sealing lip (40; 50) clears the sealing gap (30; 30E) again and renders possible escape of the gas from the gas bag (18).

4. The gas bag restraining system according to any one of the preceding claims, characterized in that the compressed gas storage (12) comprises a generally cylindrical elongated pressure container arranged parallel to the steering column (10) and connected with the interior space of the distribution chamber (24) by a pipe (22) arranged parallel to the steering column (10) and outside the same.

5. The gas bag restraining system according to any one of the preceding claims, for a steering wheel able to be adjusted axially, characterized in that the pipe is made up of telescoping sections (22A, 22B).

6. The gas bag restraining system according to any one of the preceding claims, characterized in that the sealing gap (30) is formed between the cylindrical peripheral part (24A) of the wall defining the distribution chamber (24) and the inner side of a skirt (16B) surrounding the distribution chamber (24) and formed integrally with the steering wheel hub (16A).

7. The gas bag restraining system according to any one of the preceding claims, characterized in that in the hub (16A) of the steering wheel, between lands (28) arranged spoke-like, a plurality of gas penetration openings (26) is formed which each has side surfaces converging towards the distribution chamber (24).

8. A steering wheel for a gas bag restraining system according to any one of the preceding claims, characterized in that it constitutes a premounted assembly (60) together with the gas bag (18A) which is in the form of a ring of hose, is folded up and is provided with a cover (20A).

## Revendications

1. Système de retenue par coussin gonflable, côté conducteur, pour véhicules, comprenant un réservoir (12) de gaz comprimé disposé à l'extérieur du volant (16) et destiné à remplir le coussin gonflable (18) disposé sur le moyeu (16A) du volant, ainsi qu'une arrivée de gaz disposée entre le réservoir (12) de gaz comprimé et l'orifice d'admission du coussin gonflable (18), système dans lequel l'arrivée de gaz est rendue hermétique à sa transition au volant (16) par un interstice annulaire d'étanchéité (30) situé entre une première surface de délimitation de l'interstice formée sur le moyeu (16A) du volant et une seconde surface opposée de délimitation de l'interstice située sur une paroi (24A) de l'arrivée de gaz qui est fixe par rapport à la carrosserie du véhicule, sans contact entre ces surfaces de délimitation de l'interstice, l'interstice d'étanchéité (30) permet, par son dimensionnement et sa disposition par rapport au sens d'écoulement des gaz, l'aspiration d'air extérieur par l'interstice d'étanchéité (30) sous l'effet de la circulation du gaz à l'intérieur de l'arrivée de gaz par suite de l'effet de pompe à entraînement et l'arrivée de gaz comprend une chambre de distribution (24) en forme de pot qui entoure en anneau l'arbre de direction (14) et sur laquelle la seconde surface de délimitation de l'interstice est formée, l'interstice d'étanchéité formant entre l'arrivée de gaz et l'environnement un trajet de circulation sensiblement rectiligne, caractérisé en ce que la seconde surface de délimitation de l'interstice est formée par une lèvre flexible d'étanchéité (40 ; 50) qui est disposée à l'état de repos parallèlement à la première surface de délimitation de l'interstice.

2. Système de retenue par coussin gonflable selon la revendication 1, caractérisé en ce que l'interstice d'étanchéité (30 ; 30E) est obturable par la lèvre d'étanchéité (40 ; 50) qui peut être déviée en raison de la pression de la circulation régnant dans l'arrivée de gaz lors du remplissage du coussin gonflable (18).

3. Système de retenue par coussin gonflable selon la revendication 2, caractérisé en ce que la lèvre d'étanchéité (40 ; 50) libère à nouveau l'interstice d'étanchéité (30 ; 30E) lorsque la pression du gaz s'abaisse et/ou en présence d'une circulation de sens opposé dans l'arrivée de gaz et permet aux gaz de sortir du coussin gonflable (18).

4. Système de retenue par coussin gonflable selon l'une des revendications précédentes, caractérisé en ce que le réservoir de gaz comprimé (12) comprend un récipient allongé sensiblement cylindrique sous pression qui est disposé parallèlement à la colonne de direction (10) et qui est relié au volume interne de la chambre de distribution (24) par un conduit (22) qui est parallèle à la colonne de direction (10) et disposé à l'extérieur de cette dernière.

5. Système de retenue par coussin gonflable selon l'une des revendications précédentes, destiné à un volant réglable en profondeur, caractérisé en ce que le conduit est formé d'un assemblage de tronçons (22A, 22B) déplaçables télescopiquement les uns dans les autres.

6. Système de retenue par coussin gonflable selon l'une des revendications précédentes, caractérisé en ce que l'interstice d'étanchéité (30) est formé entre la partie cylindrique de la circonférence (24A) de la paroi délimitant la chambre de distribution (24) et le côté intérieur d'un tablier (16B) venu de façonnage avec le moyeu (16A) du volant et entourant la chambre de distribution (24).

7. Système de retenue par coussin gonflable selon l'une des revendications précédentes, caractérisé en ce que plusieurs ouvertures de passage de gaz (26) sont réalisées dans le moyeu (16A) du volant entre des entretoises (28) disposées en rayons et chacune d'elles comporte des surfaces latérales convergeant vers la chambre de distribution (24).

8. Volant destiné à un système de retenue par coussin gonflable selon l'une des revendications précédentes, caractérisé en ce qu'il forme un module (60) préalablement monté avec le coussin gonflable (18A) en forme d'anneau tubulaire, qui est replié et qui comporte un élément de couverture (20A).
